# EUROPEAN PATENT SPECIFICATION

(11) **EP 3 990 255 B1**
(45) Date of publication and mention of the grant of the patent: **07.08.2024**
(21) Application number: 20733263.6
(22) Date of filing: 15.06.2020
(51) Int. Cl.: B29C 64/118, B29C 64/245, B29C 64/209, B29C 64/364, B33Y 10/00, B33Y 30/00, B33Y 40/00, B29C 64/321

(54) **PRINT HEAD AND METHOD FOR 3D PRINTING AND PRODUCTS OBTAINED THEREFROM**
DRUCKKOPF, VERFAHREN ZUM 3D-DRUCKEN UND DARAUS HERGESTELLTE PRODUKTE
TETE D'IMPRESSION, PROCEDE D'IMPRESSION 3D ET PRODUITS OBTENUS

(30) Priority: 27.06.2019 GB 201909235
(43) Date of publication of application: 04.05.2022
(73) Proprietor: Kraft Foods Schweiz Holding GmbH, 6300 Zug (CH)
(72) Inventor: ELLWOOD, Rosie Jean, Birmingham West Midlands B30 2LU (GB); MCLEOD, Emma, Birmingham West Midlands B30 2LU (GB); HENSON, Cordel, Birmingham West Midlands B30 2LU (GB); DAMISETTY, Naveen, Birmingham West Midlands B30 2LU (GB); BERNS, Chris, Birmingham West Midlands B30 2LU (GB); HARTMAN, Stefan, Birmingham West Midlands B30 2LU (GB); JEZEQUEL, Alex, Birmingham West Midlands B30 2LU (GB)
(74) Representative: Wilson Gunn
(86) International application number: PCT/EP2020/066485
(87) International publication number: WO 2020/260053

(56) References cited:
- EP-A1- 3 446 853
- JP-A- 2013 067 115
- JP-A1- WO2013 150 747
- US-A1- 2012 024 395
- US-A1- 2019 111 697
- US-B1- 6 280 785

## Description

### Technical Field of the Invention

The present invention relates to methods and apparatus for 3D printing, and products obtained therefrom. The invention further relates to methods and apparatus for 3D printing food products, in particular 3D-printed confectionery products, and products obtained therefrom.

### Background to the Invention

3-dimensional (3D) printing is a process of making a 3D solid object, in which successive layers of printing material are laid down based on a pattern from a digital template. In most 3D printing applications, the layers of material are laid down through selective laser sintering, fused deposition or stereo-lithography.

A 3D printer typically includes an extrusion head or print head which has a nozzle. A feed of raw material is fed into an upper region of the extrusion head as a solid. After being melted or rendered flowable within the extrusion head, a filament exits the extruder in its molten or flowable form as a continuous stream of molten or flowable material. The molten material is then deposited layer by layer to build up the intended product. In many 3D printing applications hundreds or even thousands of layers of build material may be layered on top of each other before the final solid object is obtained.

In many 3D printing apparatus and applications, the raw build material is presented in a cartridge or container and may be in filament form, or powder/granular form. Most modelling materials for use in known 3D printers are typically amorphous thermoplastic materials such as thermoplastic polymers.

It is also known to provide 3D printing of food such as confectionery. For example, US2012/0251688 or US 2019/111697 A1 provide a 3D printer for the 3D printing of chocolate in which the apparatus includes a reservoir configured to shear and heat a chocolate material to provide flowable chocolate, a pump configured to pump the flowable chocolate material from the reservoir and a print head configured to receive the pumped flowable chocolate material and extrude a portion thereof to form a 3-dimensional solid object.

Known 3D chocolate and confectionery extruders therefore generally utilise large containers of molten and/or tempered chocolate which are pushed, via pressure, straight to an extrusion die head as the printer head. In such apparatus, it can be very difficult to control pressures within the system or apparatus, and it can be time consuming to start the printing operation, as printing must be halted while the container is filled with solid chocolate, and then the operator must wait for the chocolate to melt and/or temper before it can be used to print a product.

It would therefore be advantageous to provide a 3D printer, or a print head thereof, which can be primed with or otherwise supplied by, a large volume of print material, such as confectionery material, but which can minimise back pressure, provide finer control over the pressure within the print head and/or reduce other drawbacks associated with extruding straight from a large reservoir of print material (such as the need for pre-extrusion).

It would also be advantageous to provide a 3D printer, or a print head thereof, which allows the print material to be introduced to the 3D printer or print head in a solid state, or to be provided in a pre-heated or flowable or plastic state before it is introduced to the printer/print head, while also facilitating quick and easy start-up of a print run and/or reducing print downtime while refilling with print material.

It would be further advantageous to provide a 3D printer, or a print head thereof, which enables printing of a food material, for example a fat-based food material or confectionery material, such as chocolate, in which the food material can be supplied to the 3D printer in discrete solid batches, but which can be printed continuously in a plastic, flowable or molten state.

It would also be advantageous to provide a method of printing 3D products which avoids or mitigates problems in handling the printed products during packaging thereof.

It is therefore an aim of embodiments of the present invention to overcome or mitigate at least one problem of the prior art, whether described herein or not.

### Summary of the Invention

According to a first aspect of the invention, as disclosed in claim 1, there is provided a print head for a 3D printer, the print head comprising a print material inlet, a print material outlet and an adjustable volume extrusion chamber, all connected by a conduit system, wherein the print material inlet is connectable to a source of print material, and wherein the conduit system comprises one or more valves operable to switch the print head between at least two configurations, the at least two configurations comprising;
a first configuration wherein the print material inlet and adjustable volume extrusion chamber are in fluid communication with each other, but not with the print material outlet, via the conduit system; and
a second configuration wherein the adjustable volume extrusion chamber and the print material outlet are in fluid communication with each other, but not with the print material inlet, via the conduit system;
wherein the print head comprises a temperature control system configured to control the temperature of at least a portion of the print head and/or at least a portion of the print material within the print head, preferably at least, or at least within, any source of print material, the adjustable volume extrusion chamber and the print material outlet and wherein at least a portion of the print head is at least partially surrounded by, covered by, or in close proximity with one or more temperature regulation elements of the temperature control system and/or may comprise one or more temperature regulation elements.

The print material may comprise any material which is in a flowable or plastic state at ambient temperature (e.g. room temperature), or which can be heated into a flowable or plastic state.

The or each print material may comprise a polymeric material, an elastomeric material, a plastic material, or a plastics material. In preferred embodiments, the print material may comprise a food material, such as a fat-based food material, for example a confectionery material, preferably chocolate, such as milk chocolate, dark chocolate, plain chocolate, compound chocolate or white chocolate, or any combination thereof.

The invention allows for only a portion of a volume of print material in a print material source to be fed into a separate extrusion chamber before it is extruded, which may allow for higher print accuracy and/or a reduction of trapped air in the print material (resulting in more controlled, high-quality prints, without the need to pre-extrude).

The or each conduit of the conduit network may comprise a pipe or tube.

In some embodiments, the conduit system may comprise a plurality of conduits which branch from each other to form a branched conduit network. In such embodiments, the conduit system may comprise a primary conduit connected to and extending from the print material inlet, and the primary conduit may have a secondary conduit branching therefrom which is connected to the adjustable volume extrusion chamber, and a tertiary conduit branching therefrom which is connected to the print material outlet. The secondary and tertiary conduits may branch from the primary conduit at different points along the primary conduit or at the same point along the primary conduit (for example such that the primary conduit effectively "splits" into the secondary and tertiary conduits).

Any combination of the primary, secondary and tertiary conduits may comprise a one-way valve and/or a flow-control valve. A "one-way valve" is defined herein as a valve which only allows print material flow therethrough in one direction, and a "flow-control valve" is defined herein as a valve which is either "on" (print material flow therethrough is possible in either direction) or "off' (no print material flow therethrough is possible, in either direction), and may therefore also be referred to herein as an "open/closed valve" or an "on/off valve".

In embodiments, the or each one-way valve may only allow print material flow in said one direction, but only when a minimum amount of force or pressure is exerted on it, for example by the print material which is forced through under pressure.

In some embodiments, the secondary conduit may comprise a flow-control valve.

In a preferred embodiment, the primary conduit comprises a flow-control valve and/or a one-way valve (wherein any one-way valve is configured to only allow print material flow in the direction from the print material inlet to the adjustable volume extrusion chamber), and the tertiary conduit comprises a flow-control valve. In such embodiments, the print head may be placed into the first configuration by having the tertiary conduit flow control valve closed, and either opening the primary conduit flow-control valve (in embodiments comprising a flow-control valve) and/or causing print material to flow through the one-way valve (thus opening it) in the direction from the print material inlet to the adjustable volume extrusion chamber (in embodiments comprising a one-way valve). Any flow-control valve in the secondary conduit would also be open in the first configuration.

Also in such embodiments, the print head may be placed into the second configuration by closing any flow-control valve in the primary conduit (or simply by having a one-way valve in the primary conduit) and opening the flow-control valve in the tertiary conduit. Any flow-control valve in the secondary conduit would also be open in the second configuration.

It may be preferred to have a flow-control valve in the tertiary conduit, especially in embodiments where the valve is positioned to prevent flow of print material not just from flow pressure generated by the print head, but also from gravity. However, in embodiments wherein flow under gravity is not such an issue (e.g. if the valve is positioned in a portion of the tertiary conduit which is substantially horizontal or inclined upwards in the direction of print material flow), then a one-way valve may suffice or be preferred. The same goes for the primary and secondary conduits (and also the first and second print head conduits described below in relation to another preferred embodiment).

The or each flow-control valve may comprise an electronic valve or mechanical valve. Any electronic flow-control valve may be independently programmed to open and close at specific times and/or in response to an electrical signal. Any flow-control valve (such as electronic or mechanical) may be independently operably linked to another component of the print head, and may open in response to actuation or movement of that component and/or in response to a signal from that component - for example, in embodiments where the adjustable volume extrusion chamber comprises a plunger or piston, the flow-control valve may be operably linked to the plunger or piston, and may open and close in response to the plunger or piston moving in one of two respective opposite directions.

In another preferred embodiment, the conduit system may comprise a central valve located at the branch point between the primary, secondary and tertiary conduits (i.e. the primary conduit is connected to the print material inlet and the central valve, the secondary conduit is connected to the adjustable volume extrusion chamber and the central valve, and the tertiary conduit is connected to the print material outlet and the central valve) and is switchable between at least two positions corresponding to the at least two configurations of the print head.

In some embodiments, in the first configuration the print material inlet and adjustable volume extrusion chamber are in fluid communication via the primary conduit, central valve (in a first position), and secondary conduit and/or in the second configuration the adjustable volume extrusion chamber and the print material outlet are in fluid communication via the secondary conduit, central valve (in a second position), and tertiary conduit.

The central valve may comprise a channel or bore therethrough comprising opposite ends which, in the respective position of the central valve, align with the appropriate conduits of the conduit network in order to place the print head into a specific configuration, or to facilitate the placing of the print head into a specific configuration. The central valve channel or bore thus creates a continuous channel between the conduits and parts of the print head, in order to bring them into fluid communication with each other. The channel or bore may be unbranched.

In preferred embodiments, the central valve is rotatable or otherwise moveable between each position.

The central valve may comprise an electronic central valve or a mechanical central valve. An electronic central valve may be programmed to switch between positions at specific times and/or in response to an electrical signal. The central valve (such as electronic or mechanical) may be independently operably linked to another component of the print head, and may switch between positions in response to actuation or movement of that component and/or in response to a signal from that component - for example, in embodiments where the adjustable volume extrusion chamber comprises a plunger or piston, the central valve may be operably linked to the plunger or piston, and may switch position in response to the plunger or piston moving in one of two respective opposite directions.

In embodiments comprising a central valve, any combination of the primary, secondary and tertiary conduits may comprise a one-way valve and/or a flow-control valve.

The first configuration of the print head is used for priming the adjustable volume extrusion chamber with print material from the print material inlet but may also be used for purging the print head, such as removing air and/or print material from the print head, for example from the adjustable volume extrusion chamber and/or the print material inlet and/or the primary conduit and/or secondary conduit.

The second configuration is used for expelling or otherwise forcing at least a portion of the print material out of the adjustable volume extrusion chamber and expelling/extruding at least a portion of the print material from the print material outlet, but may also be used for purging the print head, such as removing air and/or print material from the print head, for example from the adjustable volume extrusion chamber and/or the print material outlet and/or the secondary conduit and/or the tertiary conduit.

In some embodiments, the print head may be switchable to a third configuration wherein the print material inlet and the print material outlet are in fluid communication with each other, but not with the adjustable volume extrusion chamber, via the conduit system. In such embodiments, the secondary and tertiary conduits may each comprise a flow-control valve and the primary conduit may comprise a flow-control valve and/or a one-way valve. In embodiments comprising a central valve, the central valve may be switchable to a third position corresponding to the third configuration, in a similar way as described above for the first and second configurations.

The third configuration may be used for priming the print head with the print material and/or purging or cleaning the print head, for example priming and/or purging or cleaning the primary conduit, the tertiary conduit, the print material inlet and/or the print material outlet.

The adjustable volume extrusion chamber may comprise a piston or a plunger located therein, operable to move along the chamber to increase and decrease the volume of the chamber depending on its direction of movement. The adjustable volume extrusion chamber may comprise a reciprocating pump, such as a single-acting reciprocating pump. The adjustable volume extrusion chamber may comprise a piston pump or a plunger pump.

In some embodiments, the print material inlet may be connected to a source of print material.

The source of print material may be detachably connectable or connected to the print material inlet.

In some embodiments, the source of print material may comprise a reservoir, such as a cartridge. Preferably the reservoir or cartridge comprises an enclosed volume of print material.

In some embodiments, the reservoir may be at least partially filled with print material, which may be in a plastic or flowable state, or may be in a solid state. For example, in embodiments wherein the print material is a fat-based food material, for example a confectionery material such as chocolate, the print material may be present in the reservoir in a flowable or plastic state (for example any appropriate temperature or temperature range, such as a temperature of, or a temperature of at least, 25 °C, 26 °C, 27 °C, 28 °C, 29 °C, 30 °C, 31 °C, 32 °C, 33 °C, 34 °C or 35 °C. The temperature may be no more than 40 °C such as no more than 35 °C. The mentioned temperatures may be accurate to within ± 1 °C, ± 2 °C or ± 3 °C, for example), and/or may comprise solid and/or pre-cooled print material (such as crystallised/pre-crystallised print material, for example confectionery material such as chocolate, which may be tempered or pre-tempered).

In preferred embodiments, the reservoir has a larger volume than the maximum volume of the adjustable volume extrusion chamber. Such an arrangement allows for a large volume of print material to be connected to the print head, while avoiding problems with extruding directly from a large reservoir, such as lower plunger linear displacement accuracy, and compressible air acting as a spring within the reservoir and resulting in blow-back. The reservoir or other source of print material may have a maximum volume which is at least twice, three times, four times, five times, six times, seven times, eight times, nine times, ten times, fifteen times, twenty times, thirty times, fifty times or at least a hundred times the volume of the maximum volume of the adjustable volume extrusion chamber, for example.

The source of print material (such as removable cartridge) may have an inner volume (which may be partially or substantially completely filled with print material) of at least 500 cm³, 1000 cm³, 1500 cm³, 2000 cm³, 2500 cm³, 3000 cm³, 3500 cm³, or at least 4000 cm³.

The adjustable volume extrusion chamber may have a volume of no more than 2 cm³, 3 cm³, 4 cm³, 5 cm³, 10 cm³, 20 cm³, 30 cm³, 40 cm³, 50 cm³, 100 cm³, 200 cm³, 300 cm³, 400 cm³, 500 cm³, 600 cm³, 700 cm³, 800 cm³, 900 cm³ or 1000 cm³.

The adjustable volume extrusion chamber may have a maximum, constant and/or average inner cross-sectional area of no more than 300 mm², 250 mm², 200 mm², 190 mm², 180 mm², 170 mm², 160 mm², 150 mm², 140 mm², 130 mm², 120 mm², 110 mm², or 100

In some embodiments, the reservoir may comprise an adjustable volume reservoir. In such embodiments, the reservoir may comprise any of the volume adjustment means described above for the adjustable volume extrusion chamber, for example a piston or plunger.

The source of print material may be configured to hold, or may hold, enough print material for a whole printing shift, wherein a printing shift may comprise at least 5 hours, 6 hours, 7 hours, 8 hours, 9 hours, 10 hours, 11 hours or at least 12 hours of printing. Printing may be performed at a rate of for example at least 20, 25, 30, 35, 40, 45 or at least 50 prints (a "print" being a complete printed product) an hour, and/or at least 200 g, 250 g, 300 g, 350 g, or at least 400 g of print material an hour. The source of print material may be configured to hold, or may hold, at least 1 kg, 2 kg, 3 kg, 4 kg or at least 5 kg of print material.

In some embodiments, the source of print material may comprise a continuous feed.

The adjustable volume extrusion chamber may be configured to hold enough print material for at least 1 minute, 2 minutes, 3 minutes, 4 minutes, 5 minutes, 10 minutes, 15 minutes, 20 minutes, 25 minutes, 30 minutes, 1 hour, 2 hours or at least 3 hours of printing, for example at any of the printing rates mentioned above.

The adjustable volume extrusion chamber and/or adjustable volume reservoir (such as cartridge) may comprise at least one volume-monitoring device to monitor the volume thereof and/or of the print material contained therein. The or each volume-monitoring device may comprise at least one sensor arranged to detect the position of a piston or plunger (for example) located within the chamber and/or reservoir and/or at least one sensor arranged to detect the position or configuration of any adjustable portion of the adjustable volume extrusion chamber and/or adjustable volume reservoir. The adjustable volume extrusion chamber and/or adjustable volume reservoir (such as cartridge) and/or the or each volume-monitoring device may be operably connected to a display means for displaying information gathered by the or each volume-monitoring device.

The print material outlet may comprise a nozzle. The nozzle may taper inwardly or outwardly from base to tip. The nozzle may comprise the distal end of the tertiary conduit as described above, and may be integral with, or detachable from, the tertiary conduit. The print material outlet may comprise a housing block which houses at least a portion of the tertiary conduit. The housing block may comprise one or more temperature-regulating elements.

In some embodiments, the print material outlet may comprise a screw-containing pump, such as an auger pump.

The print head may comprise a print head block. The print head block may comprise a structural anchor to which at least some of the other components of the print head are connected. The print head block may house one or more of the primary conduit, the secondary conduit and the tertiary conduit, or a portion thereof. The print material inlet may comprise a slot, hole, cavity, recess or other print material source connection point in the print head block. The adjustable volume extrusion chamber may be formed integrally as part of the print head block, but may in other embodiments be a separate component fixed to the print head block - this may allow for easier removal, replacement, repair and/or cleaning of the adjustable volume extrusion chamber. In some embodiments, the print material outlet housing block may be formed integrally as part of the print head block, but may in other embodiments be a separate component fixed to the print head block - this may allow for easier removal, replacement, repair and/or cleaning of the housing block. The majority, or all, of the print material outlet, or the tertiary conduit thereof, may be located outside of the print head block.

In yet another preferred embodiment, the print head may comprise a first print head conduit connected to the print material inlet and a dual-port adjustable volume extrusion chamber, and a second print head conduit connected to the dual-port adjustable volume extrusion chamber and the print material outlet, the first and second print head conduits not being directly connected to each other, but only being connected indirectly by the dual-port adjustable volume extrusion chamber. The adjustable volume extrusion chamber may therefore comprise an inlet port which is fed by the first print head conduit, and an outlet port which feeds into the second print head conduit. In such embodiments, a third configuration of the print head as described above is not possible, as the print material inlet and the print material outlet can only be brought into fluid communication via the adjustable volume extrusion chamber.

The first print head conduit and/or the second print head conduit may each comprise a flow-control valve and/or a one-way valve. A first print head conduit one-way valve may be configured to only allow flow of print material in the direction from the print material inlet to the adjustable volume extrusion chamber and a second print head conduit one-way valve may be configured to only allow flow of print material in the direction from the adjustable volume extrusion chamber to the print material outlet.

In preferred embodiments, both the first print head conduit and the second print head conduit each comprise a flow-control valve and/or a one-way valve. Therefore, in such embodiments, the print head may be placed into the first configuration by having the second print head conduit flow control valve closed or by having a second print head conduit one-way valve as described above, and either opening the first print head conduit flow-control valve (in embodiments comprising a first print head conduit flow-control valve) and/or causing print material to flow through the first print head conduit one-way valve (thus opening it) in the direction from the print material inlet to the adjustable volume extrusion chamber (in embodiments comprising a first print head conduit one-way valve).

Also in such embodiments, the print head may be placed into the second configuration by having the first print head conduit flow-control valve closed or by having a first print head conduit one-way valve as described above, and either opening the second print head conduit flow-control valve (in embodiments comprising a second print head conduit flow-control valve) and/or causing print material to flow through the second print head conduit one-way valve (thus opening it) in the direction from the adjustable volume extrusion chamber to the print material outlet (in embodiments comprising a second print head conduit one-way valve).

In especially preferred embodiments, the first print head conduit and the second print head conduit each comprise a one-way valve as described above. In such embodiments, the print head effectively requires no intervention (e.g. no programming or linking to other components of the print head, as may be required with flow-control valves) to switch between the two configurations, once set up, as the one-way valves are designed to allow this.

The print head comprises a temperature control system configured to control the temperature of the print material within the print head. The temperature control system may supply heat to the print head and/or cool the print head. At least a portion of the print head may be at least partially surrounded by, covered by, or in close proximity with one or more temperature regulation elements of the temperature control system and/or may comprise one or more temperature regulation elements. In some embodiments, at least a portion of the print material inlet, print material source (if present), print head block (if present), adjustable volume extrusion chamber, primary conduit, secondary conduit, tertiary conduit, central valve (if present), print material outlet, print material outlet housing block, first print head conduit or second print head conduit or any appropriate combination thereof, may be surrounded by, covered by or close to one or more temperature regulation elements and/or may comprise one or more temperature regulation elements.

In some embodiments, the print material source (such as reservoir or cartridge) and/or the adjustable volume extrusion chamber may comprise one or more heating elements located within the wall(s) thereof. Heating elements in the print material source itself may be advantageous if it is desired to pre-heat the print material before connection of the print material source to the print head, in order to reduce print downtime upon connection of the source of print material.

In some embodiments, the print material inlet may comprise one or more walls surrounding a cavity into which/within which a source of print material (such as cartridge) may be inserted/located. In such embodiments, the print material inlet may comprise one or more heating elements located within the wall(s) thereof. This is advantageous as it allows for removable print material sources such as cartridges without heating elements built-in, as the print head itself provides the heating elements. This is particularly useful in embodiments wherein the print material (such as chocolate) is present in the cartridge in a pre-cooled, solid, and/or crystallised/pre-crystallised state before it is connected to the print head, and must be heated into a flowable or plastic state for printing. The print material inlet may therefore comprise a cartridge-receiving cavity, recess or slot such as a cartridge-receiving container or cylinder (the cylinder may have any appropriate cross-section, such as circular) which defines a cartridge-receiving cavity, recess or slot.

The or each temperature regulation element may comprise a heating element or a cooling element.

The or each temperature regulation element may comprise a sleeve or jacket arranged in contact with at least part of the outer surface of the print head, or one or more parts or components thereof. The or each sleeve or jacket may comprise a fluid jacket, such as a liquid jacket, through which a fluid may be circulated. The or each fluid jacket may comprise a water jacket. The or each sleeve or jacket may comprise an electrical heating sleeve.

Water jackets provide the advantage that they can easily be configured to switch between heating and cooling functions by simply altering the temperature of the water flowing through.

In some embodiments, substantially all surfaces which come into contact with print material inside the apparatus are temperature-controlled by the temperature control system.

In preferred embodiments, at least a portion of at least any source of print material (such as reservoir or cartridge), the adjustable volume extrusion chamber and the print material outlet are surrounded by, covered by or close to one or more temperature regulation elements and/or comprise one or more temperature regulation elements.

The temperature control system allows the temperature of the print material to be controlled as it travels through the apparatus, which is important to ensure that the print material stays within a desired temperature range, so that, for example, it doesn't at least partially or completely solidify while within the print head, or decompose under extreme heat, and/or remains in a suitable plastic or flowable state. The temperature control system may be arranged and configured to keep the print material in a flowable or plastic state - for example (especially for fat-based or confectionery food material) any appropriate temperature or temperature range, such as a temperature of, or a temperature of at least, 25 °C, 26 °C, 27 °C, 28 °C, 29 °C, 30 °C, 31 °C, 32 °C, 33 °C, 34 °C or 35 °C. The temperature may be no more than 40 °C such as no more than 35 °C. The mentioned temperatures may be accurate to within ± 1 °C, ± 2 °C or ± 3 °C, for example.

It is to be appreciated that the dimensions of the print head, or one or more components thereof, may be varied in order to optimise temperature regulation of the print material contained therein.

According to a second aspect of the invention there is provided a method of 3D printing a product using a print head of the first aspect of the invention comprising the steps of;
a) placing the print head into the first configuration and transferring a print material from a source of print material connected to the print material inlet, to the adjustable volume extrusion chamber, via the conduit network; and
b) placing the print head into the second configuration and transferring at least a portion of the print material from the adjustable volume extrusion chamber to the print material outlet, via the conduit network, and expelling it from the print material outlet to form at least a portion of a 3D printed product.

The print material may comprise any material which is in a flowable state at ambient temperature (e.g. room temperature), or which can be heated into a flowable state.

The or each print material may comprise a polymeric material, an elastomeric material, a plastic material, or a plastics material. In preferred embodiments, the print material may comprise a food material, such as a confectionery material, for example chocolate, such as milk chocolate, dark chocolate, plain chocolate, compound chocolate or white chocolate, or any combination thereof.

In embodiments wherein the print head comprises primary, secondary and tertiary conduits, step a) may comprise transferring the print material via the primary conduit and the secondary conduit, and step b) may comprise transferring the at least a portion of print material via the secondary conduit and the tertiary conduit.

In some embodiments, the method may comprise a further step of connecting a source of print material, such as a reservoir (for example a cartridge) to the print material inlet (for example connecting it to a recess, slot or hole in a print head block), prior to step a). In such embodiments, the method may further comprise filling the source of print material with print material and/or pre-heating and/or heating the source of print material (and therefore any print material therein), before connecting it to the print material inlet, print head or print head block. The print material may be pre-heated to a flowable or plastic state, or may be pre-heated to a temperature just below that required for the print material to be in a flowable or plastic state (in which case the method may further comprise a step of heating the almost-flowable/almost-plastic print material to a flowable/plastic state after connecting the source of print material, which should be a relatively quick process), such as no more than 1 °C, 2 °C, 3 °C, 4 °C, 5 °C, 6 °C, 7 °C, 8 °C, 9 °C or no more than 10 °C below the temperature required for the print material to be in a flowable or plastic state, (± 1 °C, ± 2 °C or ± 3 °C, for example).

In preferred embodiments, the print material in any source of print material (such as reservoir or removable cartridge) may be in a solid, cooled/pre-cooled, tempered/pre-tempered and/or crystallised/pre-crystallised state, and the method comprises preparing a print material in said state inside the source of print material before connecting it to the print material inlet. The method may comprise a step of heating the solid, cooled/pre-cooled and/or crystallised/pre-crystallised print material to a flowable or plastic state after connection to the print material inlet. For example, in embodiments wherein the print material comprises fat-based or confectionery food material, for example chocolate, the method may comprise at least partially filling the source of print material with solid, cooled/pre-cooled and/or crystallised/pre-crystallised print material and heating it to a flowable or plastic state after connection to the print material inlet, for example to a temperature of, or a temperature of at least, 25 °C, 26 °C, 27 °C, 28 °C, 29 °C, 30 °C, 31 °C, 32 °C, 33 °C, 34 °C or 35 °C, and/or no more than 40 °C such as no more than 35 °C (the mentioned temperatures may be accurate to within ± 1 °C, ± 2 °C or ± 3 °C, for example). One of the advantages of pre-cooling, pre-solidifying, pre-tempering and/or pre-crystallising the print material is that it may reduce and/or eliminate the need for this to be performed once it is introduced to the print head which may reduce the downtime of the print head that would have otherwise resulted if this was to be done after introduction to the print head.

In some embodiments wherein the print material inlet comprises one or more walls comprising one or more heating elements located therein, the wall(s) defining and surrounding a cavity therebetween, the method may comprise inserting the source of print material into said cavity, and heating it with said heating element(s) of the print material inlet.

Step a) may comprise increasing the volume of the adjustable volume extrusion chamber, and step b) may comprise reducing the volume of the adjustable volume extrusion chamber, for example by moving a plunger or piston in one of two opposite directions along the chamber.

Step a) may comprise drawing the print material from the print material inlet into the adjustable volume extrusion chamber under reduced pressure created by an increase in volume of the chamber. In embodiments wherein the source of print material comprises a reservoir (such as a cartridge), the reservoir may comprise an adjustable volume reservoir, and step a) may alternatively or additionally comprise reducing the volume of the reservoir (for example by moving a piston or plunger located therein) in order to push the print material out of the reservoir and along the conduit network to the adjustable volume extrusion chamber.

In embodiments comprising a reservoir, step a) may comprise transferring all of the print material located therein to the adjustable volume extrusion chamber, but preferably comprises transferring only a portion, such as no more than 1%, 2%, 3%, 4%, 5%, 10%, 15%, 20%, 30%, 40 % or no more than 50%.

In embodiments wherein the print head comprise a central valve to which are connected primary, secondary and tertiary conduits (as described in the first aspect of the invention), step a) may comprise placing (such as rotating) the central valve into a first position, and step b) may comprise placing (such as rotating) the central valve into a second position. In some embodiments, the central valve comprises a channel or bore therethrough, and the method comprises aligning the ends of the bore/channel with the appropriate conduits of the conduit network to achieve the appropriate/desired print head configuration, or to facilitate the achievement of the appropriate/desired print head configuration.

In embodiments wherein the print head comprises a primary conduit comprising a flow-control valve and/or a one-way valve and a tertiary conduit comprising a flow-control valve, step a) may comprise opening the primary conduit valve (for example by opening a flow-control valve or by causing print material to flow through a one-way valve thus opening it) and closing the tertiary conduit flow-control valve, and step b) may comprise closing the primary conduit valve (for example by closing a flow-control valve or by simply having a one-way valve which will automatically remain closed) and opening the tertiary conduit flow-control valve.

As discussed in the first aspect of the invention, in some embodiments the tertiary conduit may instead comprise a one-way valve. It is to be understood that any combination of types of valve may be used in any combination of conduits (or indeed throughout the print head), as long as it/they facilitate(s) the switching of the print head into the different configurations.

The method may further comprise a step of placing the print head into the second configuration and purging the adjustable volume extrusion chamber, the secondary conduit, the tertiary conduit, the second print head conduit, the central valve or the print material outlet, or any appropriate combination thereof. Purging may involve removing air and/or print material or residual print material, for example by reducing the volume of the adjustable volume extrusion chamber to force them out, for example by actuating a plunger or piston located therein to reduce the volume of the chamber. The purging step is preferably performed before step a) and/or after step b).

The method may further comprise a step of placing the print head into a third configuration (as described in the first aspect of the invention) and priming the print head with print material and/or purging the print head. In such embodiments, the method may comprise priming and/or purging the print material inlet, the primary conduit, the tertiary conduit, the central valve or the print material outlet, or any appropriate combination thereof. In some embodiments the step may comprise purging and then priming the print head or parts thereof. The step may be performed at any point, but preferably is performed before step a) and/or after step b).

In embodiments wherein the print head comprises a first print head conduit and a second print head conduit indirectly connected by a dual-port adjustable volume extrusion chamber, the first print head conduit being connected to the print material inlet at the opposite end thereof and comprising a one-way valve and/or a flow-control valve, and the second print head conduit being connected to the print material outlet at the opposite end thereof and comprising a one-way valve and/or flow-control valve (as described in the first aspect of the invention), step a) may comprise opening the first print head conduit valve and closing the second print head conduit valve, and step b) may comprise opening the second print head conduit valve and closing the first print head conduit valve.

The method may comprise monitoring the volume of the adjustable volume chamber and/or the source of print material (which may be an adjustable volume source of print material, such as an adjustable volume reservoir or cartridge) and/or of the print material contained therein, using one or more volume-monitoring devices and/or sensors. The method may further comprise displaying information gathered by the or each volume-monitoring device or sensor with a display means.

The method comprises regulating the temperature of at least a portion of the print head and/or at least a portion of the print material. The method may comprise regulating the temperature of the print material such that it remains in a flowable or plastic state, preferably throughout its residence time in the print head during a printing operation. The method may comprise regulating the temperature of at least a portion of, and/or at least a portion of the print material within, the print material inlet, print material source (if present), print head block (if present), adjustable volume extrusion chamber, primary conduit, secondary conduit, tertiary conduit, central valve (if present), print material outlet, print material outlet housing block, first print head conduit or second print head conduit or any appropriate combination thereof. The temperature regulation may comprise heating and/or cooling.

In preferred embodiments, the method comprises regulating the temperature of at least a portion of and/or at least a portion of the print material within any source of print material (such as reservoir or cartridge), the adjustable volume extrusion chamber and the print material outlet.

Additionally, there is provided a kit of parts comprising one or more print heads of the first aspect of the invention and one or more sources of print material connectable to the print material inlet of the or each print head.

The or each source of print material may comprise a detachable reservoir or cartridge, which is preferably pre-charged with print material. The material that the or each source of material may be pre-charged with may be in a flowable or plastic state, or may be at a temperature just below the temperature required for the print material to be in a flowable or plastic state, such as no more than 1 °C, 2 °C, 3 °C, 4 °C, 5 °C, 6 °C, 7 °C, 8 °C, 9 °C or no more than 10 °C below the temperature required for the print material to be in a flowable or plastic state. The pre-charged print material may be in a solid, cooled/pre-cooled and/or crystallised/pre-crystallised state. In embodiments wherein the print material comprises a fat-based or confectionery material, for example chocolate, the pre-charged print material may be solid chocolate, and may be crystallised/pre-crystallised chocolate. The chocolate may be tempered or pre-tempered.

Additionally, there is provided a 3D printer comprising one or more print heads of the first aspect of the invention.

The 3D printer may comprise one or more print modules comprising one or more print heads of the first aspect of the invention. The 3D printer may comprise at least 2, 3, 4, 5, 6, 7, 8, 9 or at least 10 print modules.

The 3D printer or one or more print modules may comprise at least 2, 3, 4, 5, 6, 7, 8, 9, 10, 25, 50, 75 or at least 100 print heads of the first aspect of the invention.

In embodiments wherein one or more modules comprises a plurality of print heads, the print heads of the or each module may be arranged in series, such as along a curved or straight line or along the perimeter of a shape (for example a square or a circle) optionally with one or more print heads located within the perimeter of the shape, such as concentrically and/or at or towards the centre of the shape, and/or may be arranged in any 2D or 3D array or grid. In preferred embodiments, the 3D printer comprises at least one print module comprising a plurality of print heads, the print heads arranged into at least two rows (preferably only two rows) and/or at least 2, 3, 4, 5 or at least 6 columns, for example. Examples of especially preferred print head arrangements in a print module include 3 by 2, 4 by 2, and 5 by 2 grids. However, any suitable arrangement of print heads and print modules may be employed.

In embodiments wherein at least one print module comprises a plurality of print heads, each print head within one of such modules may comprise its own separate source of print material or at least two print heads may share a common source of print material, which is connectable or connected to the print material inlet of each of those print heads. In some embodiments, each print head of at least one module comprises a single common source of print material.

In embodiments comprising a plurality of print modules, each print module may comprise its own separate source of print material or at least two print modules may share a common source of print material, which is connectable or connected to each of those modules and/or the print heads thereof. In some embodiments, the print modules comprise a single common source of print material.

The or each source of print material may comprise a source of print material substantially as described in relation to the first, second and third aspects of the invention, such as a reservoir or cartridge, which may for example be at least partially filled with print material in a flowable or plastic state, or in a solid state.

In embodiments wherein a plurality of print heads or print modules are connected to a single source of print material, the source of print material, the print heads, the print modules, and/or any conduits connecting them, may comprise one or more valves operable to allow selective filling of the adjustable volume extrusion chambers of any combination of print heads.

The 3D printer may comprise one or more temperature regulation components and/or heating components (such as print material source, adjustable volume extrusion chamber and/or print material outlet temperature regulation components and/or heating components), configured to regulate the temperature of and/or heat multiple print heads or print modules (such as multiple sources of print material, multiple adjustable volume extrusion chambers and/or multiple print material outlets). This may reduce the complexity of the 3D printer, as it removes the need for each print head or print module, or one or more components thereof (such as each print material inlet, adjustable volume extrusion chamber and/or print material outlet of each print head), to comprise its own separate and distinct temperature regulation and/or heating element(s) and/or component(s). The or each temperature regulation component and/or heating component may comprise a temperature regulation and/or heating enclosure, in which multiple print heads or print modules, or one or more components thereof (such as print material sources, adjustable volume extrusion chambers and/or print material outlets) may be located.

According to a fifth aspect of the invention there is provided a method of manufacturing one or more packaged 3D-printed products, comprising the steps of;
a) printing one or more 3D-printed products onto a base; and
b) packaging the or each 3D-printed product, wherein the or each 3D-printed product is not removed from its base during packaging, and the base forms part of the final packaged product.

The or each 3-D printed product may comprise a polymeric material, an elastomeric material, a plastic material, or a plastics material. In preferred embodiments, the print material may comprise a food material, such as a fat-based food material, for example a confectionery material, preferably chocolate, such as milk chocolate, dark chocolate, plain chocolate, compound chocolate or white chocolate, or any combination thereof.

Thus, an advantageous method is provided which allows 3D-printed products to be printed and packaged with minimal or substantially no direct handling of the product itself after it is printed. This therefore greatly simplifies the production process thereof, and also reduces risk of the product being damaged between printing and packaging.

Multiple 3D-printed products may be printed onto a shared base, but preferably each 3D-printed product is printed onto its own separate or separable base.

The or each base may comprise any suitable material, such as plastic, plastics, a polymeric material, metal, paper, carboard, cartonboard, card, or polymer-coated paper, carboard, cartonboard or card for example. In some embodiments the or each base may comprise a tray (preferably a polymeric or plastics tray, such as a thermoformed plastic tray) or a "cup" (such as a paper cup, for example a paper cup of the type typically used for cupcakes). In embodiments wherein the or each base is a cup, the or each cup may be substantially flat before and/or during step a) and subsequently folded into shape (e.g. the side wall(s) of the or each cup are folded up) during and/or after step a) such as during step b). Alternatively, the or each cup may be folded into shape throughout steps a) and b). Any paper cup may be formed by a jig.

In some embodiments, the or each base may comprise one or more gripping portions and/or one or more handles, to facilitate easier handling of the base(s) before and after printing of the or each product thereon.

Step a) may comprise positioning or loading the or each base underneath one or more print heads and/or loading the or each base into a 3D printer. In some embodiments step a) may comprise loading or positioning the or each base directly or may comprise releasably securing the or each base to a platen or puck or common platen or puck and then loading or positioning the platen or puck.

The or each base may be releasably secured to a platen or puck using any suitable means, for example any form of clamping or securement means, such as clips, magnets (either utilising purposefully added magnetic sections on the or each base, or utilising the magnetic material of the or each base itself) or inter-engaging formations between the base(s) and the platen. In preferred embodiments, step a) comprises securing the or each base to a platen via a vacuum. The method may comprise laying the or each base over one or more vacuum holes formed in the platen and applying a vacuum to the or each base through said hole(s) in order to hold the or each base in place on the platen.

In embodiments wherein multiple packaged products are manufactured (and so multiple bases are utilised, each having a product printed thereon in step a)), step a) may comprise use of a single print bed which comprises a number of separable bases, wherein a product is printed onto each base in step a), and then step b) comprises separation of the bases of the print bed so as to obtain multiple distinct bases each with a printed product located thereon. In such embodiments, the print bed may comprise lines or areas of weakness (such as perforations or areas of thinner material) which delimit and define the bases, or may comprise any other configuration which facilitates easier separation of the bases after step a). However in other embodiments, the print bed may be a substantially uniform sheet or tray - in such embodiment, the print bed may not comprise features which aid in separation into individual bases, but may comprise for example visual separation features (such as surface decoration) or may not comprise discernible individual bases, but may nevertheless be dividable into theoretical sections, each of which can have a product printed thereon, in which case step b) may comprise for example cutting the print bed at the boundary between hypothetical or visually-marked sections, thus cutting it into distinct bases.

The print bed may be held in place by any of the means described hereinabove in relation to securement of the or each base, for example clips, inter-engaging formations, magnets and/or one or more applied vacuum(s) through one or more vacuum holes or channels in the platen. In some embodiments, there may be a separate and distinct vacuum or one or more separate and distinct vacuum holes/channels or groups of vacuum holes/channels associated with each base of the print bed - this may help to hold each base in place in embodiments wherein the bases are separated while still on or secured to the platen.

In other embodiments wherein multiple packaged products are manufactured, step a) may comprise securing multiple separate and distinct, unconnected bases to a common platen. Each base may be secured to the platen with any of the above-described means, but are preferably each secured by means of an applied vacuum through one or more vacuum holes/channels, each base being associated with and held in place (in use) by its own respective vacuum hole/channel or set/group of vacuum holes/channels.

In some embodiments, the platen may comprise one or more raised areas which, in use, support respective bases (whether the bases are separate and distinct or connected as part of a common print bed). The raised areas may comprise raised-up surfaces (preferably flat and/or level surfaces), such as a "podium" - in preferred embodiments, the or each base and raised area may be complimentarily shaped such that step a) comprises laying the or each base on top of the or each raised area such that the or each raised area at least partially inserts into the or each base through the bottom side thereof, or such that the or each raised area at least partially surrounds the or each base. Either of these arrangements is advantageous as it may allow for more secure holding of the base(s) during printing and any subsequent steps which may be performed while the base(s) is/are still on the platen.

Each raised area may comprise any securement means as described herein, but preferably each comprise one or more vacuum holes/channels or groups of vacuum holes/channels.

Each base may have dimensions suitable for receiving the specific printed product. In some embodiments the base may be at least 10mm, 20mm, 30mm, 40mm or at least 50mm in diameter or width. The base may be any suitable shape, such as rectangular, square or circular, for example.

Use of a platen/puck may facilitate quicker and simpler loading/positioning of the base(s), when compared to individually inserting loading/positioning them. It also allows for a second platen to be pre-loaded with bases (or a single base) while a first platen loaded with one or more bases is in use, such that print downtime is minimised when removing the used bases and inserting new ones.

Removal of the base(s) in step b) may be facilitated by one or more removal holes in the platen which are positioned underneath the base(s) in use. The removal holes may allow an operator or machine to push the base(s) up and away from the platen from underneath by means of said removal hole(s).

The or each base may be rigid, so as to not significantly bend or deform when being handled (e.g. placed on or removed from a puck, or otherwise handled),which offers the advantage that a 3D printed product(s) located thereon will not dislodge and/or detach therefrom or will be more resistant to dislodging and/or detaching therefrom while the base(s) is/are being handled. Suitable materials for such a rigid base may include metal, alloy, composite material or hard plastic, or any combination thereof, for example.

There may be at least 2, 3, 4, 5, 6, 7, or at least 8 bases, such as separate or separable bases. In embodiments with multiple bases, the bases may be arranged in a substantially planar (or 2-dimensional) array. The array may be a regular array such as a matrix, or may be irregular. In some embodiments the array is a regular array comprising at least one row and at least one column. In preferred embodiments there are at least 8 bases arranged in at least 2 rows, such as an array of 2x4 bases, 2x5 bases or the like.

In some embodiments, step a) and/or step b) may comprise moving the platen in an XY plane (i.e. the substantially horizontal print plane) and preferably also in a Z-direction perpendicular to the XY (i.e. vertically), preferably while the one or more print heads remain stationary. Moving the platen in XY (and optionally Z) directions while keeping the or each print head stationary (at least in the XY plane) enables accurate and quick printing of complex product shapes, whilst avoiding problems associated with movement of a heavy print head (which would have heavy components such as motors, servos etc., for movement of the print head). Movement of high mass print heads creates instability (due in part to their higher centre of gravity) in the system which must be off-set by increasing the mass of the base of the 3D printing apparatus. Thus, a movable platen enables a more lightweight, stable and/or cheaper system.

Step b) may comprise any method of packaging the product(s), as long as the product(s) remain(s) on its/their base or respective base. Step b) may comprise for example wrapping the product and base, placing a cover over the product such that it comes to rest on top of the base or it surrounds the side walls of the base (such as a plastic cover) so as to form a complete box, or using any other suitable packaging technique or material. In embodiments wherein the or each base is a cup (such as a paper cup), the or each cup may be packaged individually or together, for example by putting them into a box. The base(s) may have one or more connectors which cooperate or couple with corresponding connectors on the packaging and/or other bases.

Step b) may comprise covering the product(s) and/or base(s) with a rigid cover such that the cover does not contact the product. The cover may comprise a substantial lid of the overall packaging (the whole cover may act as a lid, or the cover may comprise a removable lid portion.

The cover may be formed of plastic, cardboard, paper, cartonboard, polymer coated cardboard, polymer coated plastic, polymer coated cardboard, polymer coated paper or polymer coated cartonboard for example.

The cover may be secured to the base, for example by means of inter-engaging formations (such as tabs and/or slots, for example) or other securement means such as adhesive, ties (such as ribbons or string) or clips, for example.

Step b) may comprise forming a complete box or packaging around the entire base and product (i.e. that surrounds the base and product entirely, instead of the base itself forming the bottom surface of the overall box or packaging). Such a box may be formed with a cover as described above which additionally extends around the bottom of the base, or may for example comprise a deformable wrapping which is wrapped around the entire product and base, such as a plastic wrapping (for example shrink wrap).

The cover may comprise a cloche-like cover, such that step b) may comprise lowering the cover onto and/or over the product and/or base and optionally securing it thereto.

In some embodiments, step b) may comprise assembling a cover over and/or around the product(s) and/or base(s), such as folding a cover from a blank around or over the product and/or base.

In some embodiments, step b) may comprise locating the product and/or base within a primary packaging, for example a plastic wrapping, and then locating the packaged or wrapped product/base at least partially inside a secondary packaging, for example a rigid cover as described above.

In some embodiments, the or each base and at least a portion of the packaging may comprise inter-engaging, complementary and/or interlocking features (such as protrusions and/or recesses or slots) so that the packaging (such as the cover) may be secured to the or each base in a stable fashion. Each base may include a male connector and the packaging may include a female connector, or *vice versa,* arranged to cooperate to secure the base and packaging together.

In some embodiments the or each base may comprise base inter-engaging, complementary and/or interlocking connectors, which enable a plurality of bases to be secured or connected together in a stable fashion. Each base may include at least one male connector and at least one female connector, for example, such that in use the male connector of one base may connect with the female connector of another base.

Step b) may comprise bringing such base-packaging and/or base-base features and/or connectors into engagement.

In some embodiments, the packaging (such as the cover) may comprise base-removal features which may aid in the removal of the or each base from the packaging without substantial dismantling or breakage of the packaging. Such features may include one or more holes in the packaging underneath the or each base and/or around the side wall(s) of the packaging.

In some embodiments, the packaging may comprise one or more base hooking or attachment members which is/are secured (such as releasably secured) to the or each base (for example tied to, inserted into, or otherwise attached to, the or each base), and which facilitate the removal of the or each base, for example by allowing a consumer to pull on said members from outside or substantially near the top of the packaging, in order for the or each base to be pulled up and out of the packaging by means of the or each hooking or attachment member. The or each hooking or attachment member may comprise for example one or more ribbons, ties or rods. In some embodiments there may be a number of hooking or attachment members arranged around the periphery of the or each base and the packaging. In some embodiments, the or each hooking or attachment member is attached to or formed as part of a lid or cover of the packaging, such that removal of the lid pulls the or each base up towards the top of the packaging. In some embodiments, a similar effect may be achieved by having one or more grips or tabs on the base which protrude through holes in the packaging and which can be gripped and pulled along one or more channels in the packaging such that the base can be easily removed from the packaging from the outside.

The packaging, cover, primary packaging and/or secondary packaging may comprise at least one transparent portion and/or at least one opaque portion and/or at least one translucent portion, or may be entirely transparent, opaque or translucent.

Any cover or packaging may comprise one or more handling or gripping portions, such as one or more tabs or handles.

Any platens may comprise a platen of the sixth aspect of the invention.

According to a sixth aspect of the invention there is provided a platen for a 3D printer comprising a top face and a bottom face, wherein the top face is adapted for receiving one or more bases adapted to support a 3D-printed product, and the platen comprises one or more vacuum holes or channels extending between the top face and the bottom face thereof.

The platen may be substantially as described in relation to the fifth aspect of the invention. For example, in some embodiments the platen may comprise one or more raised areas each adapted to receive a base, the or each raised area comprising one or more vacuum holes or channels.

In some embodiments, the platen comprises one or more bases located on the top face thereof, such as for example on top of, over or inserted at least partially within one or more raised areas of the platen and/or on top of or over one or more vacuum holes/channels.

In some embodiments, the platen comprises one or more base removal holes which are configured to facilitate easier removal of any base(s) which are laid on top of/over them.

The platen and/or any base laid on top of the platen may comprise any suitable combination of features as described in relation to the fifth aspect of the invention.

The platen may be used in the method of the fifth aspect of the invention.

According to a seventh aspect of the invention there is provided a 3D printer comprising a platen of the sixth aspect of the invention, wherein the or each vacuum hole or channel of the platen is connected to a vacuum source.

The vacuum source may be any vacuum creating or inducing device, such as a vacuum pump.

In embodiments comprising multiple vacuum holes/channels or multiple groups of vacuum holes/channels, each hole/channel or each group of holes/channels may be connected to its own vacuum source or two or more holes/channels or groups may be connected to a common vacuum source. It may be advantageous for each base to be associated with one or more vacuum holes/channels or groups which are connected to their own vacuum source, as this allows for a specific base or specific bases to be removed from the platen without compromising the security/stability of the other bases on the platen.

The 3D printer may be used in the method of the fifth aspect of the invention.

Each of the fifth, sixth and seventh aspects of the invention may be suitably applied to any of the first, second, third and fourth aspects of the invention.

### Detailed Description of the Invention

In order that the invention may be more clearly understood one or more embodiments thereof will now be described, by way of example only, with reference to the accompanying drawings, of which:
- Figure 1: illustrates a cross-section through a first embodiment of a print head of the first aspect of the invention
- Figure 2a: is a zoomed in view of a portion of the cross-section of Figure 1, the central valve being positioned such that the print head is in a first configuration
- Figure 2b: illustrates a zoomed in view of a portion of the cross-section of Figure 1, the central valve being positioned such that the print head is in a second configuration
- Figure 2c: illustrates a zoomed in view of a portion of the cross-section of Figure 1, the central valve being positioned such that the print head is in a third configuration
- Figure 3: illustrates a cross-section through a second embodiment of a print head of the first aspect of the invention
- Figure 4: illustrates a cross-section through a third embodiment of a print head of the first aspect of the invention
- Figure 5: illustrates a perspective view (with a cut-away portion) of an embodiment of a platen of the sixth aspect of the invention, of use in an embodiment of the method of the fifth aspect of the invention
- Figure 6: illustrates step b) for multiple embodiments of the method of the fifth aspect of the invention

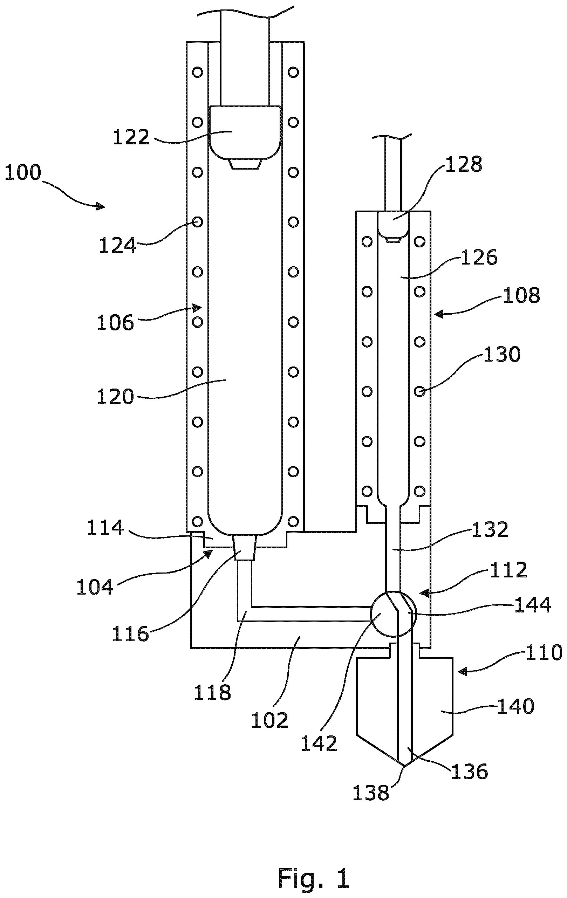

Figure 1 illustrates a cross-section through an embodiment of a print head 100 of the first aspect of the invention. The print head 100 comprises a print head block 102, a print material inlet 104, a reservoir, in the form of a cartridge 106, connected to the print material inlet 104, an adjustable volume extrusion chamber 108, a print material outlet 110 and a central valve 112.

The print material inlet 104 comprises a cartridge-receiving cylinder 114fixed to the print head block 102. The cylinder 114 comprises a continuous wall that defines a cavity in which a removable cartridge 106 is located, and a print material inlet hole 116 which is connected to a primary conduit 118, the primary conduit 118 being connected to the central valve 112 at its opposite end. The walls of the print material inlet comprise a number of heating elements 124.

The cartridge 106 has an inner volume 120 filled with print material. The print material 120 is, for example, chocolate, such as flowable or plastic milk chocolate, or solid, cooled/pre-cooled and/or crystallised/pre-crystallised milk chocolate. The cartridge 106 further comprises a plunger 122 disposed within the inner volume 120. The inner volume 120 is in fluid communication with the primary conduit 118.

The adjustable volume extrusion chamber 108 is fixed to the print head block 102 and comprises an inner volume 126 and a plunger 128 disposed therein. The chamber 108 further comprises a number of heating elements 130 and the chamber 108 is connected to a secondary conduit 132 which is connected to the central valve 112 at its opposite end. The inner volume 126 is in fluid communication with the secondary conduit 132.

The print material outlet 110 comprises a tertiary conduit 136 which is connected to the central valve 112 at a first end and comprises a tapering nozzle 138 at a second end. The tertiary conduit 136 is housed within a temperature-regulating housing block 140, which is itself connected to the print head block 102.

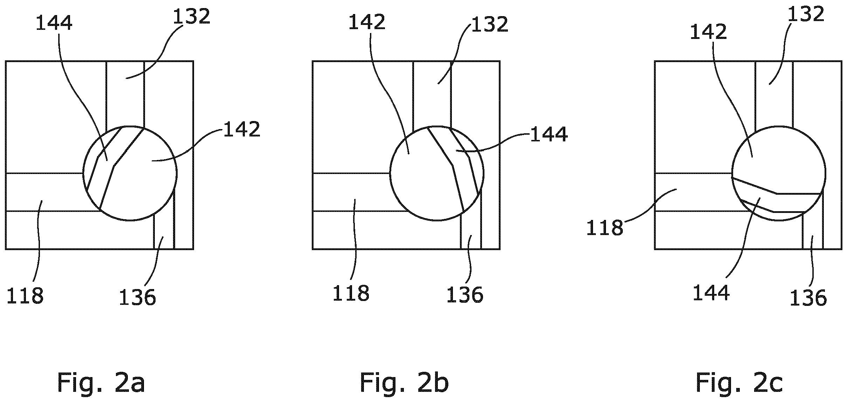

The central valve 112, which is connected to the primary, secondary and tertiary conduits 118, 132, 136, comprises a rotatable disk 142 comprising a channel 144 therethrough. As shown in Figures 2a-2c, the central valve 112 may be rotated between 3 different configurations. A first configuration is shown in Figure 2a, whereby the valve 112/disk 142 is orientated such that the channel 144 aligns with the primary conduit 118 at one end, and the secondary conduit 132 at the other, thus bringing the print material inlet 104 (and thus the inner volume 120 of the cartridge 106) into fluid communication with the adjustable volume extrusion chamber 108 (i.e. the inner volume thereof 126). A second configuration is shown in Figure 2b, whereby the central valve 112/disk 142 is orientated such that the channel 144 aligns with the secondary conduit 132 at one end, and the tertiary conduit 136 at the other, thus bringing the adjustable volume extrusion chamber 108 (i.e. the inner volume thereof 126) into fluid communication with the print material outlet 110. A third configuration is shown in Figure 2c, whereby the central valve 112/disk 142 is orientated such that the channel 144 aligns with the tertiary conduit 136 at one end, and the primary conduit 118 at the other, thus bringing the print material outlet 110 into fluid communication with the print material inlet 104 (and thus the inner volume 120 of the cartridge 106). In Figure 1, the central valve 112/disk 142 is shown in the second configuration.

In order to 3D print a product using the print head 100 of Figure 1 and Figures 2a-c, first the cartridge 106 is connected to the print material inlet 104 by inserting it into the cavity (formed between the walls thereof) and inlet hole 116 of the cartridge-receiving cylinder 114 and securing it in place. The central valve 112/disk 142 is then rotated into the first configuration (as per Figure 2a) and the cartridge plunger 122 is actuated to exert a downward force on the print material in the inner volume 120 of the cartridge 106. This forces the print material through the primary conduit 118, through the channel 144 of the central valve 112, through the secondary conduit 132 and into the inner volume 126 of the adjustable volume extrusion chamber 108. The chamber plunger 128 may be forced upwards by this force and/or may be actuated itself to move upwards and draw the print material up into the chamber 108 under reduced pressure. As more print material enters the chamber 108, the inner volume 126 of the chamber 108 thus increases in size to accommodate it.

When the chamber plunger 128 reaches the desired level (usually the top of the chamber 108) and the chamber 108 therefore contains the desired amount of print material, the central valve 112/disk 142 is rotated into the second configuration (as per Figure 2b), and the chamber plunger 128 is actuated to exert a force on the print material in the inner volume 126 thereof. Print material is thus forced out of the inner volume 126 of the chamber 108, along the secondary conduit 132, through the channel 144 of the central valve 112, through the tertiary conduit 136 and out of the nozzle 138, where it is used to 3D print at least a portion of a product.

The heating elements 124, 130 and the temperature-regulating housing block 140 ensure that the print material remains in a flowable or plastic state during its residence time within the print head 100.

In preferred embodiments, the milk chocolate print material 120 is present in the cartridge in a solid, cooled, crystallised state before and while being connected to the print material inlet 104. The heating elements 124 of the cartridge-receiving cylinder 114 are then used to heat the chocolate 120 into a flowable or plastic state in order to be used for printing. This methodology allows the cooling and crystallising steps of the chocolate print material 120 to be performed away from the print head 100 (or any 3D printer comprising one or more of said print heads 100), which will reduce the downtime of the print head 100 / 3D printer when switching cartridges, which would otherwise have resulted from these processes needing to be performed after the print material 102 was connected to the print head 100.

The central valve 112/disk 142 may also be placed into a third configuration (as per Figure 2c). This may be useful, for example, to prime the primary and tertiary conduits 118, 136 and/or central valve 112 (i.e. the channel 144 thereof) with print material before a print or print run and/or to clean or purge them.

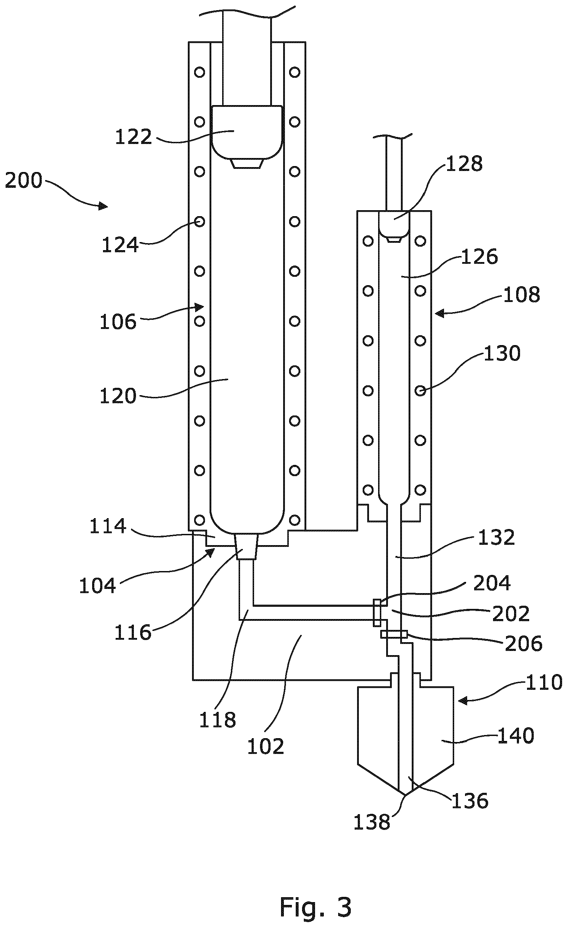

Figure 3 illustrates a cross-section through a second embodiment of a print head 200 of the first aspect of the invention.

The print head 200 is similar to the print head 100 of Figure 1, and like numerals represent like components, except that there is no central valve at the branch point 202 between the primary conduit 118, secondary conduit 132 and tertiary conduit 136, but instead they branch from each other to form a continuous branched conduit/conduit network. Furthermore, the primary conduit 118 comprises a first flow-control (on/off) valve 204 and the tertiary conduit 136 comprises a second flow-control (on/off) valve 206.

In use, the print head 200 functions much like the print head 100 of Figure 1, except that the print head is placed into the first and second configurations by means of the first and second flow-control valves - in the first configuration, the first flow-control valve 204 is open and the second flow-control valve 206 is closed, and in the second configuration the second flow-control valve 206 is open and the first flow-control valve 204 is closed. In other embodiments, the first flow-control valve 204 may instead comprise a one-way valve configured to only allow flow of print material in the direction from the cartridge 106 to the adjustable volume extrusion chamber 108 - such a one-way valve would therefore be automatically closed for the second configuration of the print head 200, and could be opened for the first configuration of the print head 200 simply by causing print material to flow through it (e.g. using the one or both of the plungers 122, 128 as described above in relation to the print head 100 of Figure 1).

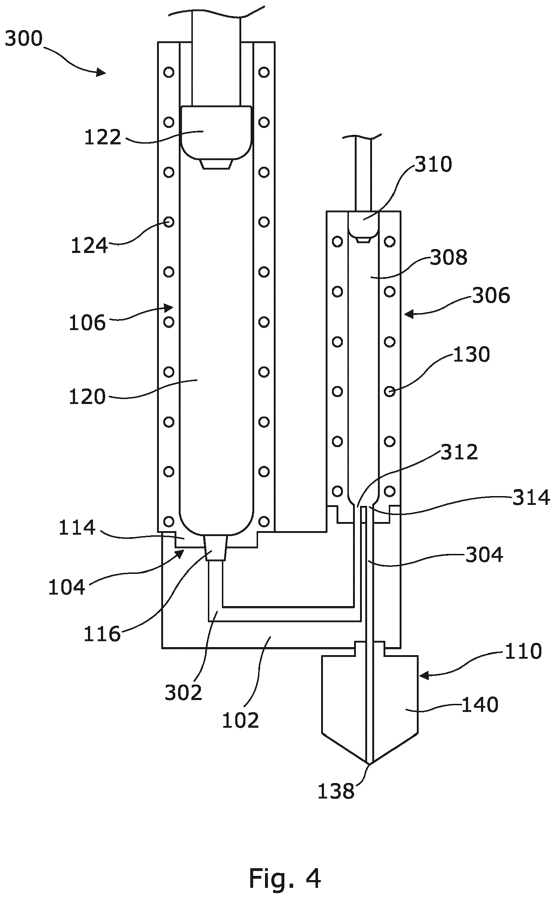

Figure 4 illustrates a cross-section through a third embodiment of a print head 300 of the first aspect of the invention. The print head 300 comprise many of the same or similar components as the other print heads 100, 200 described above, and like numerals represent like components. In contrast to the previously-described print heads 100, 200, the print head 300 of Figure 4 comprises a first print head conduit 302 and a second print head conduit 304, which are not directly connected and do not branch directly from one another, but are instead indirectly connected by a dual-port adjustable volume extrusion chamber 306, the chamber 306 comprising an inner volume 308 and a plunger 310 disposed within the inner volume 308. The first print head conduit 302 is connected to the chamber 306 at one of the ports, and comprises a chamber inlet due to the presence of a first one-way valve 312 located therein, which is configured to allow flow of print material only in the direction from the print material inlet 104 to the dual port adjustable volume extrusion chamber 306. The second print head conduit 304 is connected to the chamber 306 at the other port, and comprises a chamber outlet due to the presence of a second one-way valve 314 located therein, which is configured to allow flow of print material only in the direction from the dual port adjustable volume extrusion chamber 306 to the print material outlet 110.

In use, the plunger 122 (and optionally the chamber plunger 310) is/are actuated in a similar way as for the previously-described print heads 100, 200. The difference comes in that the print head 100 is placed into the first and second configurations using the first and second one-way valves 312, 314 - when print material is forced out of the cartridge 106 and along the first print head conduit 302, the first one-way valve 312 is forced open, while the second one-way valve 314 remains shut, thus placing the print head 300 into the first configuration, and when print material is forced out of the adjustable volume extrusion chamber 306, the second one-way valve 314 is forced open, while the first one-way valve 312 remains shut, thus placing the print head 300 into the second configuration. This embodiment has the advantage that the two one-way valves 312, 314 are essentially self-operating once installed, and do not require further input to function (e.g. no programming or linking to other components of the print head, as may be required with flow-control valves). However, in other embodiments one or both of the one-way valves 312, 314 may instead comprise a flow-control valve, which is operable to be opened or closed to place the print head 300 into the correct/desired configuration.

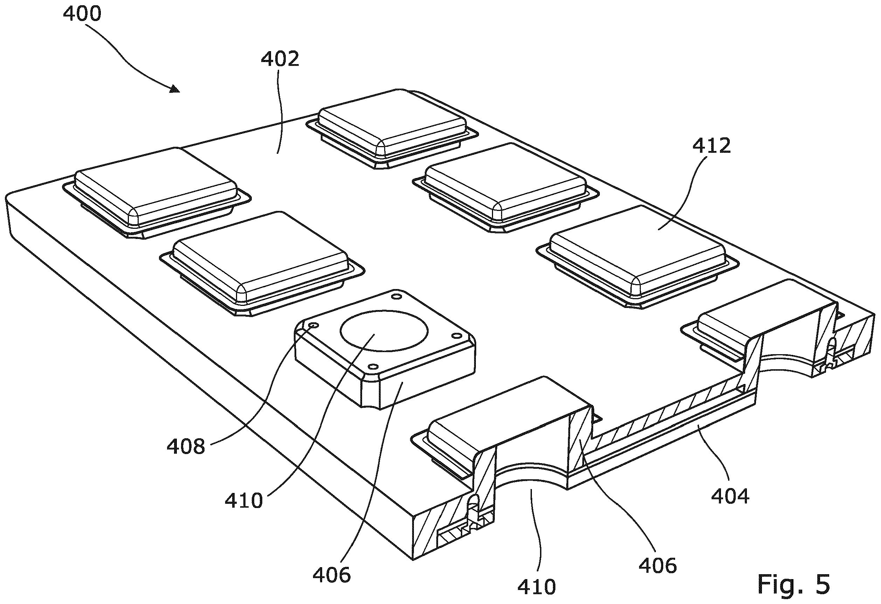

Figure 5 illustrates a perspective view (with a cut-away portion) of an embodiment of a platen 400 of the sixth aspect of the invention, of use in an embodiment of the method of the fifth aspect of the invention. The platen 400 comprises a top face 402, a bottom face 404 opposite the top face 402, and multiple raised areas in the form of eight raised platforms 406. Each raised platform 406 comprises four vacuum channels 408 and a base removal hole 410. Eight plastic bases 412 are laid on top of the top face 402 of the platen 400, more specifically each base 412 is laid on top of a respective platform 406 and comprises side walls which hang down over the platform 406.

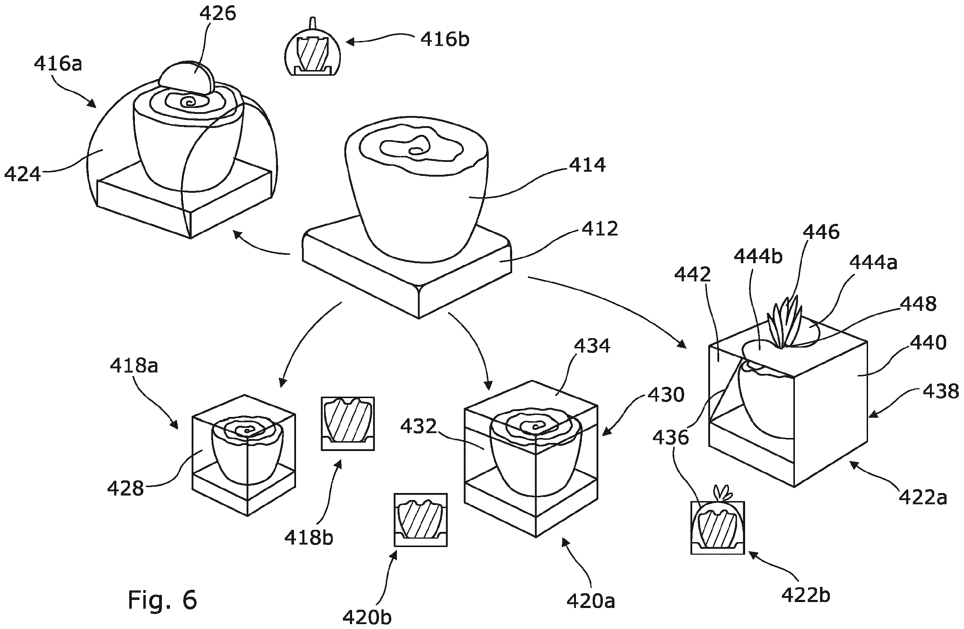

In use, the bases 412 are placed onto the platforms 406 and the platen 400 is placed into a 3D printer. A vacuum is then applied through the vacuum channels 408 to hold the bases 412 in place during printing. A product (such as the confectionery product 414 shown in Figure 6) is then printed onto each base 412, the applied vacuum is ceased such that the bases 412 can be removed from the platen 400.

As can be seen in Figure 6, a 3D printed product 414 located on a base 412 which has been removed from the platen 400 (but in some embodiments may be packaged while still on the platen 400) can be packaged in a number of ways without removing the product 414 from the base 412. Four different types of final packaging 416a, 418a, 420a, 422a (each accompanied by respective cross-sections 416b, 418b, 420b, 422b). The alternative packaging 416, 418, 420, 422 all comprise the same base 412 and differ in that different forms of plastic cover and/or wrapping have been placed over the product 414 and base 412.

Packaging 416 comprises a rounded polymer-coated cartonboard cover 424 which comprises a handling tab 426 to facilitate handling of the cover 424. The cover 424 is secured, such as glued, to the top of the base 412, but in other embodiments may be wrapped around the base 412 such that it envelopes the entire base 412, and locked or otherwise secured in place. In any case, the cover 424 forms a complete box around the product 414, either by itself, or in conjunction with the base 412. The cover 424 is rigid such that it does not come into contact with the product 414.

Packaging 418 comprises a rigid plastic cover 428, which has been lowered onto the base 412 (in a similar manner as a cloche) such that it comes to rest on top of the base 412, and is secured, such as glued, thereto. The base 412 and cover 428 thus form a complete box around the product 414. In other embodiments, the cover 428 may be configured such that it surrounds the side walls of the base 412 and fits tightly around it (i.e. has slightly greater width and length than the base 412). Such a cover may be secured (e.g. glued) to the side walls of the base 412.

Packaging 420 also comprises a rigid plastic cover 430 which is the same as the hard-plastic cover 428 of packaging 418, except that it is comprised of two portions; a first portion 432 which is secured directly to the base 412, and a second portion 434 which is mounted to the top edge of the first portion 432. The cover 430 is configured such that, in use, the second portion 434 can be removed from the first portion 432 in order to access the product 414 from above.

Packaging 422 comprises a plastic bag 436 and a rigid plastic cover 438. The rigid plastic cover 438 is located over the product 414 and base 412 and has side walls which come into contact with the side walls of the base 412, where they are secured thereto (for example with glue). The rigid cover 438 comprises two opaque opposing side walls 440 and two transparent opposing side walls 442 (which allow viewing of the product 414 in the bag 436 through the cover 438), and further comprises inter-engaging formations 444a, 444b, which come into engagement to form the top face of the cover 438. The plastic bag 436 comprises a deformable plastic sheet which has been laid underneath the base 412 and brought up around the product 414 on all sides, and comprises a bunched-up portion 446 where the areas of the plastic sheet which have been brought up and around the product 414 have been bunched together. The bunched-up portion 446 protrudes from inside the cover 438 to the outside thereof, through a gap 448 formed between the inter-engaging formations 444a, 444b. The bag 436 is thus entirely surrounded by the cover 438, except for this "tuft" of plastic formed by the bunched-up portion 446 which protrudes through the top of the cover 438.

The one or more embodiments are described above by way of example only. Many variations are possible without departing from the scope of protection afforded by the appended claims.

## Claims

1. A print head (100) for a 3D printer, the print head (100) comprising a print material inlet (104), a print material outlet (110) and an adjustable volume extrusion chamber (108), all connected by a conduit system, wherein the print material inlet (104) is connectable to a source of print material, and wherein the conduit system comprises one or more valves operable to switch the print head (100) between at least two configurations, the at least two configurations comprising;
a first configuration wherein the print material inlet (104) and adjustable volume extrusion chamber (108) are in fluid communication with each other, but not with the print material outlet (110), via the conduit system; and
a second configuration wherein the adjustable volume extrusion chamber (108) and the print material outlet (110) are in fluid communication with each other, but not with the print material inlet (104), via the conduit system;
wherein the print head comprises a temperature control system configured to control the temperature of at least a portion of the print head (100) and/or at least a portion of the print material within the print head (100), preferably at least, or at least within, any source of print material, the adjustable volume extrusion chamber (108) and the print material outlet (110) and wherein at least a portion of the print head (100) is at least partially surrounded by, covered by, or in close proximity with one or more temperature regulation elements of the temperature control system and/or may comprise one or more temperature regulation elements.

2. A print head as claimed in claim 1 wherein the conduit system comprises a primary conduit (118) connected to and extending from the print material inlet (104), a secondary conduit (132) branching from the primary conduit (118) and connected to the adjustable volume extrusion chamber (108), and a tertiary conduit (136) branching from the primary conduit (118) and connected to the print material outlet (110).

3. A print head as claimed in claim 2 wherein the primary conduit comprises a flow-control valve (204) and/or a one-way valve, any one-way valve in the primary conduit (118) being configured to only allow print material flow in the direction from the print material inlet (104) to the adjustable volume extrusion chamber (108), and the tertiary conduit (136) comprises a flow-control valve (206) and/or a one-way valve, any one-way valve in the tertiary conduit (136) being configured to only allow print material flow in the direction from the adjustable volume extrusion chamber (108) to the print material outlet (110).

4. A print head as claimed in claim 2 or claim 3 wherein the conduit system comprises a central valve (112) located at a branch point between the primary (118), secondary (132) and tertiary conduits (136) such that the primary conduit (118) is connected to the print material inlet (104) and the central valve (112), the secondary conduit (132) is connected to the adjustable volume extrusion chamber (108) and the central valve (112), and the tertiary conduit (136) is connected to the print material outlet (110) and the central valve (112), and wherein the central valve (112)is switchable between at least two positions corresponding to the at least two configurations of the print head (100) such that in the first configuration the print material inlet (104) and adjustable volume extrusion chamber (108) are in fluid communication via the primary conduit (118), central valve (112), and secondary conduit (132) and/or in the second configuration the adjustable volume extrusion chamber (108) and the print material outlet (110) are in fluid communication via the secondary conduit (132), central valve (112), and tertiary conduit (136).

5. A print head as claimed in claim 4 wherein the central valve (112) comprises a channel or bore therethrough comprising opposite ends which, in the respective position of the central valve (112), align with the appropriate conduits of the conduit network in order to place the print head (100) into a specific configuration, or to facilitate the placing of the print head (100) into a specific configuration, the central valve channel or bore creating a continuous channel between the appropriate conduits and parts of the print head (100), in order to bring them into, or to facilitate the bringing into, fluid communication with each other.

6. A print head as claimed in any preceding claim wherein the adjustable volume extrusion chamber (108) comprises a piston or a plunger located therein, operable to move along the chamber (108) to increase and decrease the volume of the chamber (108) depending on the direction of movement.

7. A print head as claimed in any one of claims 2 to 6 wherein the print head comprises a print head block which houses at least a portion of one or more of the primary conduit (118), the secondary conduit (132) and the tertiary conduit (136), wherein the print material inlet (104) comprises a slot, hole, cavity, recess or other print material source connection point in the print head block, and wherein the adjustable volume extrusion chamber (108) or a portion thereof and/or the print material outlet (110) or a portion thereof is/are formed integrally with or connected to the print head block.

8. A print head as claimed in any preceding claim wherein the print head (100) is switchable to a third configuration wherein the print material inlet (104) and the print material outlet (110) are in fluid communication with each other, but not with the adjustable volume extrusion chamber (108), via the conduit system.

9. A print head as claimed in claim 1 or claim 6 when dependent on claim 1 wherein the print head (100) comprises a first print head conduit (302) connected to the print material inlet (104) and a dual-port adjustable volume extrusion chamber (306), and a second print head conduit (304) connected to the dual-port adjustable volume extrusion chamber (306) and the print material outlet (110), the first (302) and second print head conduits (304) being connected indirectly by the dual-port adjustable volume extrusion chamber (306), and wherein both the first print head conduit (302) and the second print head conduit (304) each comprise a flow-control valve and/or a one-way valve operable to place the print head (100) into the first and second configuration.

10. A print head as claimed in any one of the preceding claims, wherein the print material source and/or the adjustable volume extrusion chamber (108) comprise one or more heating elements (130) located within the wall(s) thereof.

11. A method of 3D printing a product using a print head as claimed in any preceding claim comprising the steps of;
a) placing the print head (100) into the first configuration and transferring a print material from a source of print material connected to the print material inlet (104), to the adjustable volume extrusion chamber (108), via the conduit network; and
b) placing the print head (100) into the second configuration and transferring at least a portion of the print material from the adjustable volume extrusion chamber (108) to the print material outlet (110), via the conduit network, and expelling it from the print material outlet (110) to form at least a portion of a 3D printed product.

12. A method as claimed in claim 11 wherein the print head comprises primary (118), secondary (132) and tertiary (136) conduits, the primary conduit (118) comprising a flow-control valve (204) and/or a one-way valve and the tertiary conduit (136) comprising a flow-control valve (206) and/or a one-way valve, wherein step a) comprises opening the primary conduit valve (204), closing the tertiary conduit valve (206) and transferring the print material via the primary conduit (118) and the secondary conduit (132), and step b) comprises closing the primary conduit valve (204), opening the tertiary conduit valve (206) and transferring the at least a portion of print material via the secondary conduit (132) and the tertiary conduit (136).

13. A method as claimed in either one of claim 11 or claim 12 wherein step a) comprises increasing the volume of the adjustable volume extrusion chamber (108), and step b) comprises reducing the volume of the adjustable volume extrusion chamber (108).

14. A method as claimed in any one of claims 11 to 13 wherein the print head (100) comprises a central valve (112) to which the primary (118), secondary (132) and tertiary (136) conduits are connected, wherein step a) comprises placing the central valve (112) into a first position, and step b) comprises placing the central valve (112) into a second position.

15. A method as claimed in claim 11 or claim 13 when dependent on claim 11 wherein the print head (100) comprises a first print head conduit (302) and a second print head conduit (304) indirectly connected by a dual-port adjustable volume extrusion chamber (306), wherein the first print head conduit (302) is connected to the print material inlet (104) and the adjustable volume extrusion chamber (306) and the second print head conduit (304) is connected to the adjustable volume extrusion chamber (306) and the print material outlet (110), the first print head conduit (302) and second print head conduit (304) each comprising a one-way valve and/or a flow-control valve, wherein step a) comprises opening the first print head conduit valve and closing the second print head conduit valve, and step b) comprises opening the second print head conduit valve and closing the first print head conduit valve.

## Patentansprüche

1. Druckkopf (100) für einen 3D-Drucker, der Druckkopf (100) umfassend einen Druckmaterialeinlass (104), einen Druckmaterialauslass (110) und eine Extrusionskammer (108) mit einstellbarem Volumen, die alle durch ein Leitungssystem verbunden sind, wobei der Druckmaterialeinlass (104) mit einer Druckmaterialquelle verbunden werden kann und wobei das Leitungssystem ein oder mehrere Ventile umfasst, die betriebsfähig sind, um den Druckkopf (100) zwischen mindestens zwei Konfigurationen umzuschalten, die mindestens zwei Konfigurationen umfassend;
eine erste Konfiguration, wobei der Druckmaterialeinlass (104) und die Extrusionskammer (108) mit einstellbarem Volumen über das Leitungssystem in Fluidkommunikation miteinander, jedoch nicht mit dem Druckmaterialauslass (110), stehen; und
eine zweite Konfiguration, wobei die Extrusionskammer (108) mit einstellbarem Volumen und der Druckmaterialauslass (110) über das Leitungssystem in Fluidkommunikation miteinander, jedoch nicht mit dem Druckmaterialeinlass (104), stehen;
wobei der Druckkopf ein Temperaturkontrollsystem umfasst, das konfiguriert ist, um die Temperatur von mindestens einem Abschnitt des Druckkopfs (100) und/oder mindestens einem Abschnitt des Druckmaterials innerhalb des Druckkopfs (100), vorzugsweise mindestens, oder mindestens innerhalb, einer beliebigen Druckmaterialquelle, der Extrusionskammer (108) mit einstellbarem Volumen und des Druckmaterialauslasses (110), zu regeln, und wobei mindestens ein Abschnitt des Druckkopfs (100) mindestens teilweise durch einen oder mehrere Temperaturkontrollelemente des Temperaturkontrollsystems umgeben, durch diese bedeckt oder in unmittelbarer Nähe dieser ist und/oder ein oder mehrere Temperaturkontrollelemente umfassen kann.

2. Druckkopf nach Anspruch 1, wobei das Leitungssystem eine primäre Leitung (118) umfasst, die mit dem Druckmaterialeinlass (104) verbunden ist und sich von diesem erstreckt, eine sekundäre Leitung (132), die von der primären Leitung (118) abzweigt und mit der Extrusionskammer (108) mit einstellbarem Volumen verbunden ist, und eine tertiäre Leitung (136), die von der primären Leitung (118) abzweigt und mit dem Druckmaterialauslass (110) verbunden ist.

3. Druckkopf nach Anspruch 2, wobei die primäre Leitung ein Durchflussregelventil (204) und/oder ein Einwegventil umfasst, wobei ein beliebiges Einwegventil in der primären Leitung (118) konfiguriert ist, um nur einen Druckmaterialfluss in der Richtung von dem Druckmaterialeinlass (104) zu der Extrusionskammer (108) mit einstellbarem Volumen zuzulassen, und die tertiäre Leitung (136) ein Durchflussregelventil (206) und/oder ein Einwegventil umfasst, wobei ein beliebiges Einwegventil in der tertiären Leitung (136) konfiguriert ist, um nur einen Druckmaterialfluss in der Richtung von der Extrusionskammer (108) mit einstellbarem Volumen zu dem Druckmaterialauslass (110) zuzulassen.

4. Druckkopf nach Anspruch 2 oder 3, wobei das Leitungssystem ein Zentralventil (112) umfasst, das sich an einem Verzweigungspunkt zwischen der primären (118), sekundären (132) und tertiären Leitung (136) derart befindet, dass die primäre Leitung (118) mit dem Druckmaterialeinlass (104) und dem Zentralventil (112) verbunden ist, die sekundäre Leitung (132) mit der Extrusionskammer (108) mit einstellbarem Volumen und dem Zentralventil (112) verbunden ist und die tertiäre Leitung (136) mit dem Druckmaterialauslass (110) und dem Zentralventil (112) verbunden ist, und wobei das Zentralventil (112) zwischen mindestens zwei Positionen umschaltbar ist, die den mindestens zwei Konfigurationen des Druckkopfs (100) derart entsprechen, dass in der ersten Konfiguration der Druckmaterialeinlass (104) und die Extrusionskammer (108) mit einstellbarem Volumen über die primäre Leitung (118), das Zentralventil (112) und die sekundäre Leitung (132) in Fluidkommunikation stehen und/oder in der zweiten Konfiguration die Extrusionskammer (108) mit einstellbarem Volumen und der Druckmaterialauslass (110) über die sekundäre Leitung (132), das Zentralventil (112) und die tertiäre Leitung (136) in Fluidkommunikation stehen.

5. Druckkopf nach Anspruch 4, wobei das Zentralventil (112) einen Kanal oder eine Bohrung dahindurch umfasst, umfassend gegenüberliegende Enden, die sich, in der jeweiligen Position des Zentralventils (112), an den geeigneten Leitungen des Leitungsnetzes ausrichten, um den Druckkopf (100) in eine spezifische Konfiguration zu platzieren oder um das Platzieren des Druckkopfs (100) in eine spezifische Konfiguration zu erleichtern, wobei der Kanal oder die Bohrung des Zentralventils einen durchgehenden Kanal zwischen den geeigneten Leitungen und Teilen des Druckkopfs (100) erzeugt, um sie in Fluidkommunikation miteinander zu bringen oder das Bringen in diese zu erleichtern.

6. Druckkopf nach einem der vorstehenden Ansprüche, wobei die Extrusionskammer (108) mit einstellbarem Volumen einen Kolben oder einen Stößel umfasst, der sich darin befindet, der betriebsfähig ist, um sich entlang der Kammer (108) zu bewegen, um das Volumen der Kammer (108) abhängig von einer Bewegungsrichtung zu vergrößern oder zu verkleinern.

7. Druckkopf nach einem der Ansprüche 2 bis 6, wobei der Druckkopf einen Druckkopfblock umfasst, der mindestens einen Abschnitt von einer oder mehrerer der primären Leitung (118), sekundären Leitung (132) und tertiären Leitung (136) beherbergt, wobei der Druckmaterialeinlass (104) einen Schlitz, ein Loch, einen Hohlraum, eine Aussparung oder einen anderen Verbindungspunkt für eine Druckmaterialquelle in dem Druckkopfblock umfasst, und wobei die Extrusionskammer (108) mit einstellbarem Volumen oder ein Abschnitt davon und/oder der Druckmaterialauslass (110) oder ein Abschnitt davon mit dem Druckkopfblock integral ausgebildet oder mit diesem verbunden ist/sind.

8. Druckkopf nach einem der vorstehenden Ansprüche, wobei der Druckkopf (100) in eine dritte Konfiguration umschaltbar ist, in der der Druckmaterialeinlass (104) und der Druckmaterialauslass (110) über das Leitungssystem in Fluidkommunikation miteinander, jedoch nicht mit der Extrusionskammer (108) mit einstellbarem Volumen, stehen.

9. Druckkopf nach Anspruch 1 oder 6, wenn von Anspruch 1 abhängig, wobei der Druckkopf (100) eine erste Druckkopfleitung (302), die mit dem Druckmaterialeinlass (104) und einer Extrusionskammer (306) mit einstellbarem Volumen und zwei Anschlüssen verbunden ist, und eine zweite Druckkopfleitung (304) umfasst, die mit der Extrusionskammer (306) mit einstellbarem Volumen und zwei Anschlüssen und dem Druckmaterialauslass (110) verbunden ist, wobei die erste (302) und die zweite Druckkopfleitung (304) durch die Extrusionskammer (306) mit einstellbarem Volumen und zwei Anschlüssen indirekt verbunden sind, und wobei sowohl die erste Druckkopfleitung (302) als auch die zweite Druckkopfleitung (304) jeweils ein Durchflussregelventil und/oder ein Einwegventil umfassen, das betriebsfähig ist, um den Druckkopf (100) in die erste und die zweite Konfiguration zu platzieren.

10. Druckkopf nach einem der vorstehenden Ansprüche, wobei die Druckmaterialquelle und/oder die Extrusionskammer (108) mit einstellbarem Volumen ein oder mehrere Heizelemente (130) umfassen, die sich innerhalb der Wand/den Wänden davon befinden.

11. Verfahren zum 3D-Drucken eines Produkts unter Verwendung eines Druckkopfs nach einem der vorstehenden Ansprüche, umfassend die Schritte;
a) Platzieren des Druckkopfs (100) in der ersten Konfiguration und Übertragen eines Druckmaterials von einer Druckmaterialquelle, die mit dem Druckmaterialeinlass (104) verbunden ist, über das Leitungsnetz zu der Extrusionskammer (108) mit einstellbarem Volumen; und
b) Platzieren des Druckkopfs (100) in der zweiten Konfiguration und Übertragen von mindestens einem Abschnitt des Druckmaterials aus der Extrusionskammer (108) mit einstellbarem Volumen über das Leitungsnetz zu dem Druckmaterialauslass (110) und Ausstoßen von diesem aus dem Druckmaterialauslass (110), um mindestens einen Abschnitt eines 3D-gedruckten Produkts auszubilden.

12. Verfahren nach Anspruch 11, wobei der Druckkopf eine primäre (118), eine sekundäre (132) und eine tertiäre (136) Leitung umfasst, die primäre Leitung (118) umfassend ein Durchflussregelventil (204) und/oder ein Einwegventil und die tertiäre Leitung (136) umfassend ein Durchflussregelventil (206) und/oder ein Einwegventil, wobei Schritt a) ein Öffnen des primären Leitungsventils (204), ein Schließen des tertiären Leitungsventils (206) und das Übertragen des Druckmaterials über die primäre Leitung (118) und die sekundäre Leitung (132) umfasst, und Schritt b) das Schließen des primären Leitungsventils (204), das Öffnen des tertiären Leitungsventils (206) und das Übertragen von mindestens einem Abschnitt des Druckmaterials über die sekundäre Leitung (132) und die tertiäre Leitung (136) umfasst.

13. Verfahren nach Anspruch 11 oder 12, wobei Schritt a) das Vergrößern des Volumens der Extrusionskammer (108) mit einstellbarem Volumen umfasst und Schritt b) ein Reduzieren des Volumens der Extrusionskammer (108) mit einstellbarem Volumen umfasst.

14. Verfahren nach einem der Ansprüche 11 bis 13, wobei der Druckkopf (100) ein Zentralventil (112) umfasst, mit dem die primäre (118), die sekundäre (132) und die tertiäre (136) Leitung verbunden sind, wobei Schritt a) das Platzieren des Zentralventils (112) in einer ersten Position umfasst und Schritt b) das Platzieren des Zentralventils (112) in einer zweiten Position umfasst.

15. Verfahren nach Anspruch 11 oder 13, wenn abhängig von Anspruch 11, wobei der Druckkopf (100) eine erste Druckkopfleitung (302) und eine zweite Druckkopfleitung (304) umfasst, die durch eine Extrusionskammer (306) mit einstellbarem Volumen und zwei Anschlüssen indirekt verbunden sind, wobei die erste Druckkopfleitung (302) mit dem Druckmaterialeinlass (104) und der Extrusionskammer (306) mit einstellbarem Volumen verbunden ist und die zweite Druckkopfleitung (304) mit der Extrusionskammer (306) mit einstellbarem Volumen und dem Druckmaterialauslass (110) verbunden ist, die erste Druckkopfleitung (302) und die zweite Druckkopfleitung (304) jeweils umfassend ein Einwegventil und/oder ein Durchflussregelventil, wobei Schritt a) das Öffnen des ersten Druckkopfleitungsventils und das Schließen des zweiten Druckkopfleitungsventils umfasst, und Schritt b) das Öffnen des zweiten Druckkopfleitungsventils und das Schließen des ersten Druckkopfleitungsventils umfasst.

## Revendications

1. Tête d'impression (100) destinée à une imprimante 3D, la tête d'impression (100) comprenant une entrée de matériau d'impression (104), une sortie de matériau d'impression (110) et une chambre d'extrusion à volume ajustable (108), étant toutes raccordées par un système de conduit, dans laquelle l'entrée de matériau d'impression (104) peut être raccordée à une source de matériau d'impression, et dans laquelle le système de conduit comprend une ou plusieurs vannes fonctionnelles pour commuter la tête d'impression (100) entre au moins deux configurations, les au moins deux configurations comprenant ;
une première configuration dans laquelle l'entrée de matériau d'impression (104) et la chambre d'extrusion à volume ajustable (108) sont en communication fluidique l'une avec l'autre, mais pas avec la sortie de matériau d'impression (110), par l'intermédiaire du système de conduit ; et
une deuxième configuration dans laquelle la chambre d'extrusion à volume ajustable (108) et la sortie de matériau d'impression (110) sont en communication fluidique l'une avec l'autre, mais pas avec l'entrée de matériau d'impression (104), par l'intermédiaire du système de conduit ;
dans laquelle la tête d'impression comprend un système de commande de température configuré pour commander la température d'au moins une partie de la tête d'impression (100) et/ou d'au moins une partie du matériau d'impression au sein de la tête d'impression (100), de préférence d'au moins, ou au moins au sein de, l'une quelconque source de matériau d'impression, de la chambre d'extrusion à volume ajustable (108) et de la sortie de matériau d'impression (110) et dans laquelle au moins une partie de la tête d'impression (100) est au moins partiellement entourée par, couverte par, ou à proximité immédiate d'un ou plusieurs éléments de régulation de température du système de commande de température et/ou peut comprendre un ou plusieurs éléments de régulation de température.

2. Tête d'impression selon la revendication 1 dans laquelle le système de conduit comprend un conduit primaire (118) raccordé à et s'étendant à partir de l'entrée de matériau d'impression (104), un conduit secondaire (132) se ramifiant à partir du conduit primaire (118) et raccordé à la chambre d'extrusion à volume ajustable (108), et un conduit tertiaire (136) se ramifiant à partir du conduit primaire (118) et raccordé à la sortie de matériau d'impression (110).

3. Tête d'impression selon la revendication 2 dans laquelle le conduit primaire comprend une vanne de commande d'écoulement (204) et/ou une vanne unidirectionnelle, l'une quelconque vanne unidirectionnelle dans le conduit primaire (118) étant conçue pour autoriser uniquement un écoulement de matériau d'impression dans la direction allant de l'entrée de matériau d'impression (104) à la chambre d'extrusion à volume ajustable (108), et le conduit tertiaire (136) comprend une vanne de commande d'écoulement (206) et/ou une vanne unidirectionnelle, l'une quelconque vanne unidirectionnelle dans le conduit tertiaire (136) étant conçue pour autoriser uniquement un écoulement de matériau d'impression dans la direction allant de la chambre d'extrusion à volume ajustable (108) à la sortie de matériau d'impression (110).

4. Tête d'impression selon la revendication 2 ou la revendication 3 dans laquelle le système de conduit comprend une vanne centrale (112) localisée au niveau d'un point de ramification entre les conduits primaire (118), secondaire (132) et tertiaire (136) de telle sorte que le conduit primaire (118) est raccordé à l'entrée de matériau d'impression (104) et à la vanne centrale (112), le conduit secondaire (132) est raccordé à la chambre d'extrusion à volume ajustable (108) et à la vanne centrale (112), et le conduit tertiaire (136) est raccordé à la sortie de matériau d'impression (110) et à la vanne centrale (112), et dans laquelle la vanne centrale (112) est commutable entre au moins deux positions correspondant aux au moins deux configurations de la tête d'impression (100) de telle sorte que dans la première configuration l'entrée de matériau d'impression (104) et la chambre d'extrusion à volume ajustable (108) sont en communication fluidique par l'intermédiaire du conduit primaire (118), de la vanne centrale (112) et du conduit secondaire (132) et/ou dans la deuxième configuration la chambre d'extrusion à volume ajustable (108) et la sortie de matériau d'impression (110) sont en communication fluidique par l'intermédiaire du conduit secondaire (132), de la vanne centrale (112) et du conduit tertiaire (136).

5. Tête d'impression selon la revendication 4 dans laquelle la vanne centrale (112) comprend un canal ou trou à travers celle-ci comprenant des extrémités opposées qui, dans la position respective de la vanne centrale (112), s'alignent avec les conduits appropriés du réseau de conduits afin de placer la tête d'impression (100) dans une configuration spécifique, ou de faciliter la mise en place de la tête d'impression (100) dans une configuration spécifique, le canal ou trou de vanne centrale créant un canal continu entre les conduits et pièces de la tête d'impression (100) appropriés, afin de les amener, ou de faciliter le fait de les amener, en communication fluidique les uns avec les autres.

6. Tête d'impression selon l'une quelconque revendication précédente dans laquelle la chambre d'extrusion à volume ajustable (108) comprend un piston ou un mécanisme coulissant localisé à l'intérieur de celle-ci, fonctionnel pour se déplacer le long de la chambre (108) pour augmenter et diminuer le volume de la chambre (108) en fonction de la direction de déplacement.

7. Tête d'impression selon l'une quelconque des revendications 2 à 6 dans laquelle la tête d'impression comprend un bloc de tête d'impression qui loge au moins une partie d'un ou plusieurs parmi le conduit primaire (118), le conduit secondaire (132) et le conduit tertiaire (136), dans laquelle l'entrée de matériau d'impression (104) comprend une fente, un trou, une cavité, un évidement ou autre point de raccordement de source de matériau d'impression dans le bloc de tête d'impression, et dans laquelle la chambre d'extrusion à volume ajustable (108) ou une partie de celle-ci et/ou la sortie de matériau d'impression (110) ou une partie de celle-ci est/sont formées de manière solidaire au bloc de tête d'impression.

8. Tête d'impression selon l'une quelconque revendication précédente dans laquelle la tête d'impression (100) est commutable vers une troisième configuration dans laquelle l'entrée de matériau d'impression (104) et la sortie de matériau d'impression (110) sont en communication fluidique l'une avec l'autre, mais pas avec la chambre d'extrusion à volume ajustable (108), par l'intermédiaire du système de conduit.

9. Tête d'impression selon la revendication 1 ou la revendication 6 prise en dépendance de la revendication 1 dans laquelle la tête d'impression (100) comprend un premier conduit de tête d'impression (302) raccordé à l'entrée de matériau d'impression (104) et à la chambre d'extrusion à volume ajustable à double orifice (306), et un second conduit de tête d'impression (304) raccordé à la chambre d'extrusion à volume ajustable à double orifice (306) et à la sortie de matériau d'impression (110), les premier (302) et second conduits de tête d'impression (304) étant raccordés indirectement par la chambre d'extrusion à volume ajustable à double orifice (306), et dans laquelle tant le premier conduit de tête d'impression (302) que le second conduit de tête d'impression (304) comprennent chacun une vanne de commande d'écoulement et/ou une vanne unidirectionnelle fonctionnelles pour placer la tête d'impression (100) dans la première et la deuxième configuration.

10. Tête d'impression selon l'une quelconque des revendications précédentes, dans laquelle la source de matériau d'impression et/ou la chambre d'extrusion à volume ajustable (108) comprennent un ou plusieurs éléments chauffants (130) localisés au sein de la ou des paroi(s) de celles-ci.

11. Procédé d'impression 3D d'un produit à l'aide d'une tête d'impression selon l'une quelconque revendication précédente comprenant les étapes consistant à ;
a) placer la tête d'impression (100) dans la première configuration et transférer un matériau d'impression d'une source de matériau d'impression raccordée à l'entrée de matériau d'impression (104), vers la chambre d'extrusion à volume ajustable (108), par l'intermédiaire du réseau de conduits ; et
b) placer la tête d'impression (100) dans la deuxième configuration et transférer au moins une partie du matériau d'impression de la chambre d'extrusion à volume ajustable (108) vers la sortie de matériau d'impression (110), par l'intermédiaire du réseau de conduits, et l'expulser à partir de la sortie de matériau d'impression (110) pour former au moins une partie d'un produit imprimé en 3D.

12. Procédé selon la revendication 11 dans lequel la tête d'impression comprend des conduits primaire (118), secondaire (132) et tertiaire (136), le conduit primaire (118) comprenant une vanne de commande d'écoulement (204) et/ou une vanne unidirectionnelle et le conduit tertiaire (136) comprenant une vanne de commande d'écoulement (206) et/ou une vanne unidirectionnelle, dans lequel l'étape a) comprend l'ouverture de la vanne de conduit primaire (204), la fermeture de la vanne de conduit tertiaire (206) et le transfert du matériau d'impression par l'intermédiaire du conduit primaire (118) et du conduit secondaire (132), et l'étape b) comprend la fermeture de la vanne de conduit primaire (204), l'ouverture de la vanne de conduit tertiaire (206) et le transfert de l'au moins une partie de matériau d'impression par l'intermédiaire du conduit secondaire (132) et du conduit tertiaire (136).

13. Procédé selon l'une de la revendication 11 ou de la revendication 12 dans lequel l'étape a) comprend l'augmentation du volume de la chambre d'extrusion à volume ajustable (108), et l'étape b) comprend la réduction du volume de la chambre d'extrusion à volume ajustable (108).

14. Procédé selon l'une quelconque des revendications 11 à 13 dans lequel la tête d'impression (100) comprend une vanne centrale (112) à laquelle les conduits primaire (118), secondaire (132) et tertiaire (136) sont raccordés, dans lequel l'étape a) comprend le placement de la vanne centrale (112) dans une première position, et l'étape b) comprend le placement de la vanne centrale (112) dans une seconde position.

15. Procédé selon la revendication 11 ou la revendication 13 prise en dépendance de la revendication 11 dans lequel la tête d'impression (100) comprend un premier conduit de tête d'impression (302) et un second conduit de tête d'impression (304) raccordés indirectement par une chambre d'extrusion à volume ajustable à double orifice (306), dans lequel le premier conduit de tête d'impression (302) est raccordé à l'entrée de matériau d'impression (104) et à la chambre d'extrusion à volume ajustable (306) et le second conduit de tête d'impression (304) est raccordé à la chambre d'extrusion à volume ajustable (306) et à la sortie de matériau d'impression (110), le premier conduit de tête d'impression (302) et le second conduit de tête d'impression (304) comprenant chacun une vanne unidirectionnelle et/ou une vanne de commande d'écoulement, dans lequel l'étape a) comprend l'ouverture de la vanne de premier conduit de tête d'impression et la fermeture de la vanne de second conduit de tête d'impression, et l'étape b) comprend l'ouverture de la vanne de second conduit de tête d'impression et la fermeture de la vanne de premier conduit de tête d'impression.
